# EUROPÄISCHE PATENTSCHRIFT

(11) **EP 2 792 616 B1**
(45) Veröffentlichungstag und Bekanntmachung des Hinweises auf die Patenterteilung: **29.06.2016**
(21) Anmeldenummer: 14154844.6
(22) Anmeldetag: 12.02.2014
(51) Int. Cl.: B65D 75/32, B65D 83/04, H01M 2/02, H01M 2/10, H01M 10/04, H01M 6/08, H01M 12/06

(54) **Verfahren zur Produktion un Lagerung von Knopfzellen**
Method for the production and storage of button cells
Procédé de production et de stockage de piles boutons

(30) Priorität: 16.04.2013 DE 102013206877
(43) Veröffentlichungstag der Anmeldung: 22.10.2014
(73) Patentinhaber: VARTA Microbattery GmbH, 73479 Ellwangen (DE)
(72) Erfinder: Gaugler, Winfried, 73479 Ellwangen-Eigenzell (DE); Barenthin, Nils, 73479 Ellwangen (DE)
(74) Vertreter: Patentanwaltskanzlei Cartagena

(56) Entgegenhaltungen:
- EP-A1- 0 058 089
- JP-A- S6 178 050
- US-A- 4 437 579
- US-A1- 2008 032 191

## Beschreibung

Die vorliegende Erfindung betrifft ein Verfahren zur Herstellung von Knopfzellen und ein Lager- und Transportmedium für Knopfzellen.

Knopfzellen weisen üblicherweise ein Gehäuse aus zwei napfförmigen Gehäusehalbteilen, einem Zellenbecher und einem Zellendeckel, auf. Diese können beispielsweise aus vernickeltem Tiefziehblech als Stanzziehteile hergestellt werden. In dem Gehäuse können die verschiedensten elektrochemischen Systeme enthalten sein, beispielsweise Zink/Luft, Zink/Braunstein oder Zink/Silberoxid. Die genannten Systeme verwenden Zink als Anodenmaterial und Braunstein, Silberoxid oder Luftsauerstoff als Kathodenmaterial.

Der Zellenbecher und der Zellendeckel weisen jeweils einen Boden, einen umlaufenden Mantel sowie eine endständige Schnittkante auf. Letztere bildet den Öffnungsrand der Gehäusehalbteile. Bei der Montage der Knopfzelle wird der Zellendeckel mit der Schnittkante voran in den Zellenbecher eingeschoben, bis diese auf dem Boden des Zellenbechers oder einem Stützelement, beispielsweise einem Stützring, aufsitzt. Zuvor wird allerdings ein Kunststoffring derart positioniert, dass er den Zellenbecher und den Zellendeckel nach der Montage elektrisch gegeneinander isoliert. Bevorzugt wird der Kunststoffring dazu auf den Mantel des Zellendeckels aufgebracht. Er kann beispielsweise aus Polyamid oder aus einem Polyetherketon bestehen.

Meist wird der Zellenbecher solcher Knopfzellen positiv und der Zellendeckel negativ gepolt. Zur Herstellung der Knopfzellen wird der Zellendeckel zur Bildung einer Anode mit dem jeweiligen Anodenmaterial befüllt. Dieses liegt bevorzugt in Pulver- oder Pastenform vor. Das korrespondierende Kathodenmaterial liegen ebenfalls meist pulverförmig vor, gegebenenfalls in einer Mischung mit Graphit und/oder einem anderen Leitmittel. Zur Bildung einer Kathode wird es im Zellenbecher positioniert oder in diesen eingepresst. Es kann vorteilhaft sein, es hierzu zu in Tablettenform zu bringen oder zu einem Granulat zu verarbeiten. Bei der Montage von Zink/Luft-Knopfzellen wird an Stelle des Kathodenmaterials ein meist scheibenförmiges Katalysatorelement in den Zellenbecher eingesetzt.

Bevor die mit dem Anoden- und dem Kathodenmaterial befüllten Gehäusehalbteile auf die oben beschriebene Weise ineinander geschoben werden, wird ein poröser Separator, beispielsweise aus einem Vlies oder aus einem Kunststoff wie beispielsweise Polypropylen, derart in einem der Gehäusehalbteile, vorzugsweise im Zellenbecher, positioniert, dass er nach Abschluss der Montage einen direkten Kontakt von Anoden- und Kathodenmaterial unterbindet.

Meist ist der Separator mit einer Elektrolytlösung, bevorzugt einer wässrigen alkalischen Lösung wie Kalilauge, getränkt. Die Elektrolytlösung kann aber vor oder nach dem Positionieren des Separators auch separat in den Zellenbecher und/oder den Zellendeckel eindosiert werden.

Der flüssigkeitsdichte Verschluss der Knopfzellen erfolgt bekanntlich in aller Regel durch Umbördeln des Öffnungsrandes des Zellenbechers. Hierbei wird auf den zwischen Zellenbecher und Zellendeckel angeordneten Kunststoffring ein radialer Druck ausgeübt, der Kunststoffring wird komprimiert und dichtet das Gehäuse ab. Er fungiert somit nicht nur als elektrischer Isolator sondern auch als Dichtung.

Damit das Anodenmaterial während der Montage nicht aus dem Zellendeckel herausfällt, muss dieser während des Montageverlaufs mindestens so lange mit dem Öffnungsrand nach oben positioniert sein, bis er mit dem Zellenbecher kombiniert wird. Es hat sich allerdings gezeigt, dass dies dazu führen kann, dass das Anodenmaterial in der fertig montierten Zelle nicht gleichmäßig am Separator anliegt. Dadurch kann es zu willkürlichen Schwankungen des Innenwiderstandes produzierter Knopfzellen kommen.

Um diesem Problem zu begegnen, werden gemäß obiger Vorgehensweise produzierte Knopfzellen im Betrieb der Anmelderin mit Hilfe einer Zentrifuge chargenweise derart geschleudert, dass das Anodenmaterial durch die Wirkung der beim Zentrifugieren auftretenden Zentrifugalkraft gegen den Separator gedrückt wird. Hierdurch werden Knopfzellen erhalten, sie sich durch eine deutlich verbesserte Kontaktierung von Anode, Separator und Kathode und entsprechend durch einen vergleichsweise geringen und schwankungsarmen Innenwiderstand auszeichnen.

Hierzu werden bislang die Knopfzellen auf sogenannten Zentrifugiertabletts angeordnet. Die Tabletts werden mit einer Abdeckplatte abgedeckt, so dass die Zellen unabhängig von der räumlichen Orientierung des Tabletts nicht vom Tablett rutschen können. Anschließend werden die Zentrifugiertabletts in einer Zentrifugiertrommel angeordnet und es wird zentrifugiert. Nach abgeschlossenem Zentrifugiervorgang werden die Zellen entnommen, und in einem Folgeschritt in eine Folienverpackung eingeschweißt, um sie in einen lager- und transportfähigen Zustand zu versetzen. Beispielsweise können sie in die Aufnahmen eines Lager- und Transportmediums, wie es in der JP S61-78050 A, in der DE 4402038 A1 oder in der US 2008/0032191 A1 beschrieben ist, eingebracht werden.

Das Zentrifugieren von Knopfzellen ist bereits in der EP 0058089 A1 und in der JP 2 722 414 B2 beschrieben worden, jeweils zum Zwecke der verbesserten Kontaktierung von Anode und Separator. Der japanischen Druckschrift sind konkrete Angaben zu während des Zentrifugiervorgangs eingestellten Fliehkräften zu entnehmen. Ansonsten werden aber keine weiteren Angaben zu den Details der Zentrifugiervorgänge gemacht.

Der vorliegend beschriebene Erfindung lag die Aufgabe zugrunde, ein verbessertes Verfahren zur Herstellung von Knopfzellen bereitzustellen. Diese Aufgabe wird gelöst durch das Verfahren mit den Merkmalen des Anspruchs 1. Bevorzugte Ausführungsformen des erfindungsgemäßen Verfahrens sind in den abhängigen Ansprüchen 2 bis 4 angegeben. Auch das Lager- und Transportmedium gemäß Anspruch 5 ist Gegenstand der vorliegenden Erfindung. Eine bevorzugte Ausführungsform des erfindungsgemäßen Lager- und Transportmediums ist im abhängigen Anspruch 6 angegeben Der Wortlaut sämtlicher Ansprüche wird hiermit durch Bezugnahme zum Inhalt dieser Beschreibung gemacht.

Bei dem erfindungsgemäßen Verfahren werden - in Analogie zum Stand der Technik - Knopfzellen aus ihren Einzelkomponenten gefertigt. Bei den Knopfzellen handelt es sich bevorzugt um Zink/Luft-, Zink/Braunstein- oder Zink/Silberoxid-Zellen.

Die meisten Einzelkomponenten, die bei der Fertigung zum Einsatz kommen, fanden bereits Erwähnung, die wichtigsten sind im Folgenden dennoch noch einmal aufgelistet:
- Zellenbecher und Zellendeckel,
- Kathoden (bzw. Kathodenmaterial),
- Anoden (bzw. Anodenmaterial),
- Separatoren,
- Kunststoffringe (als Dichtungen bzw. als elektrischer Isolator) und
- ein Elektrolyt.

Bezüglich möglicher Ausgestaltungen dieser Komponenten sowie bezüglich deren Montage wird auf die obenstehenden Ausführungen zum Stand der Technik verwiesen. Das erfindungsgemäße Verfahren weicht in diesen Punkten nicht von diesem ab.

Zum Zwecke der Verbesserung der Kontaktierung von Anode, Separator und Kathode werden die montierten Zellen auch bei dem erfindungsgemäßen Verfahren einem Zentrifugiervorgang unterworfen, bei dem die aus dem Anodenmaterial gebildete Anode durch die Wirkung der beim Zentrifugieren auftretenden Zentrifugalkraft gegen den Separator gedrückt wird.

Allerdings weicht die Durchführung des Zentrifugiervorgangs sehr deutlich vom bekannten Stand der Technik ab. Es werden nämlich für den Zentrifugiervorgang
- ein Band mit napfförmigen Aufnahmen bereitgestellt,
- die montierten Zellen in den Aufnahmen positioniert, und
- das Band gewickelter Form um eine Achse angeordnet und um diese Achse herum in Rotation versetzt, so dass die Anode durch die gebildete Fliehkraft gegen den Separator gepresst wird.

Bevorzugt wird das Band um die Achse herum aufgewickelt oder aufgerollt, vorzugsweise spiralförmig aufgewickelt oder aufgerollt (so dass es als Rolle vorliegt). Wird die Achse in Rotation versetzt, so rotiert auch die Rolle.

Um zu gewährleisten, dass die Anode durch die gebildete Fliehkraft gegen den Separator gepresst wird, ist es zweckmäßig, sämtliche zu zentrifugierende Knopfzellen in gleicher Ausrichtung in den Aufnahmen zu positionieren, also beispielsweise mit dem Boden des Zellenbechers voran in den Aufnahmen zu positionieren. Beim Aufrollen eines derart bestückten Bandes ist darauf zu achten, dass die Aufnahmen radial nach außen weisen. Die Zentrifugalkraft wirkt dann in Richtung des Separators bzw. gegen den Separator. Natürlich ist es umgekehrt auch möglich, die Knopfzellen mit der Zellendeckelseite voran in den Aufnahmen zu positionieren und das Band so aufzuwickeln, dass die Aufnahmen radial nach außen weisen.

Die Verwendung des Bandes als Träger für die zu zentrifugierenden Knopfzellen bietet eklatante Vorteile. Auf die Verwendung der sehr viel aufwendiger handhabbaren Zentrifugiertabletts kann verzichtet werden. Es ist auch nicht mehr erforderlich, die Knopfzellen nach abgeschlossenem Zentrifugiervorgang zwecks Lagerung und Transport in eine Folienverpackung zu überführen. Stattdessen kann das Band selbst als Transport- und Lagerverpackung für die Knopfzellen dienen. Insbesondere in Rollenform nimmt es nur wenig Raum ein.

Vorzugsweise handelt es sich bei dem Band um ein Kunststoffband, in das die Aufnahmen beispielsweise mittels eines Tiefziehvorgangs eingebracht sind. Das Band hat üblicherweise eine Länge von zwischen 50 cm und 300 m. Seine Breite liegt in der Regel zwischen 8 mm und 25 cm.

Bevorzugt weist das Band in Querrichtung Reihen aus mindestens zwei Aufnahmen, vorzugsweise aus zwischen 4 und 8 Aufnahmen, auf. In Längsrichtung kann das Band Reihen aus mehreren hundert Aufnahmen aufweisen. Ein Band bietet entsprechend Plätze für eine gegebenenfalls vierstellige Zahl von zu zentrifugierenden Knopfzellen.

Die Maße der napfförmigen Aufnahmen sind auf die Dimensionen der zu zentrifugierenden Knopfzellen abgestimmt. Die Aufnahmen können entsprechend Durchmesser von wenigen Millimetern bis wenigen Zentimetern aufweisen. Ihre Tiefe bewegt sich in der Regel in der gleichen Größenordnung.

Als Material für das Band kommen beispielsweise Polyester, Polystyrol oder Polyethylen in Frage. Auch mehrlagige Bänder, beispielsweise umfassend eine Lage Polystyrol und eine Lage Polyethylen, können zum Einsatz kommen. In bevorzugten Ausführungsformen kann das Band aus einem faserverstärkten Kunststoff bestehen.

Es ist bevorzugt, dass die Aufnahmen mit den darin positionierten Zellen mit einer Abdeckfolie abgedeckt werden, insbesondere bevor das Band um die Achse herum angeordnet wird. Als Abdeckfolie kann beispielsweise eine transparente Kunststofffolie dienen. Diese kann durch Verklebung oder mittels eines Heißsiegelprozesses auf das Band aufgebracht werden.

Zum Zentrifugieren kann das Band beispielsweise in einer Zentrifugiertrommel angeordnet oder auf den Mantel einer Zentrifugierspule aufgewickelt werden. Letzteres ist bevorzugt. Als Zentrifugierspulen können z.B. zylindrische Spulen oder Scheibenspulen (Spulen mit einem zylindrischen Mittelteil sowie mit überstehenden Begrenzungen an dessen Stirnseiten) verwendet werden. Auf dieses zylindrische Mittelteil wird das Band gegebenenfalls aufgewickelt oder aufgerollt.

Wie bereits erwähnt, kann das Band selbst als Transport- und Lagerverpackung für die zentrifugierten Knopfzellen dienen. Entsprechend ist auch ein Lager- und Transportmedium für Knopfzellen, umfassend ein Band mit napfförmigen Aufnahmen, in denen die Knopfzellen angeordnet sind, Gegenstand der vorliegenden Erfindung.

Das erfindungsgemäße Lager- und Transportmedium für Knopfzellen umfasst eine als Zentrifugierspule dienende Scheibenspule mit einem zylindrischen Mittelteil sowie mit überstehenden Begrenzungen an dessen Stirnseiten sowie ein auf dem zylindrischen Mittelteil aufgewickeltes Band mit napfförmigen Aufnahmen, in denen die Knopfzellen angeordnet sind. Das Band selbst liegt also bevorzugt als Wickel oder als Rolle vor. Betreffend die mögliche Beschaffenheit und mögliche Eigenschaften des Bandes wird auf die obigen Ausführungen hierzu verwiesen.

Weitere Merkmale der Erfindung ergeben sich aus der nun folgenden Beschreibung der Zeichnungen sowie bevorzugter Ausführungsformen in Verbindung mit den Unteransprüchen. Hierbei können einzelne Merkmale jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

### Figurenbeschreibung

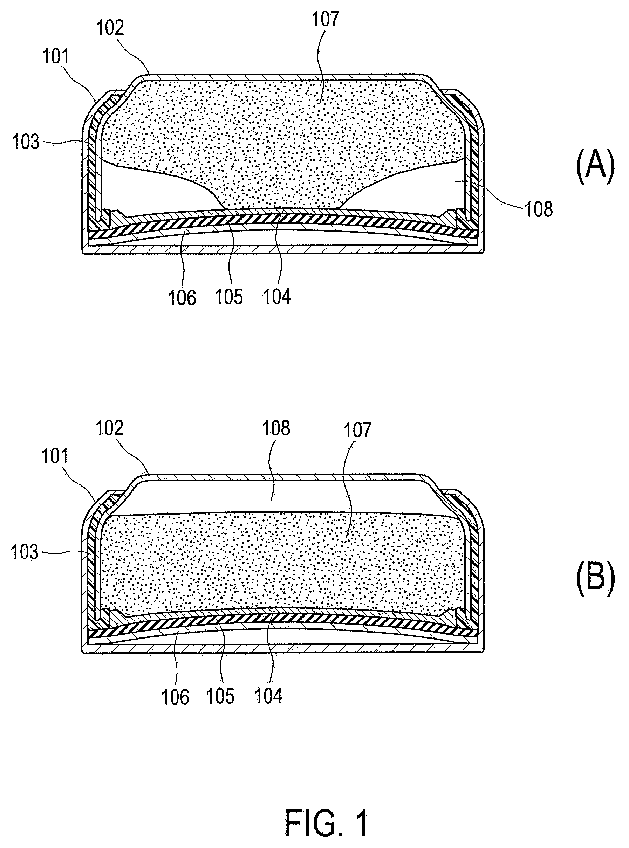

**Fig. 1** zeigt jeweils im Querschnitt eine zu zentrifugierende Zink/Luft-Knopfzelle (A) und eine gemäß dem erfindungsgemäßen Verfahren zentrifugierte Zink/Luft-Knopfzelle (B). Dargestellt ist jeweils das Gehäuse der Knopfzellen aus dem Zellenbecher **101** und dem Zellendeckel **102**, welche durch den als Dichtung fungierenden Kunststoffring **103** elektrisch voneinander isoliert sind. Innerhalb des Gehäuses sind die Anode **107** (eine Paste aus Zinkpulver, einem Binder und einem alkalischen Elektrolyten) und das scheibenförmige Katalysatorelement **105** angeordnet. Getrennt sind diese durch den mit dem alkalischen Elektrolyten getränkten Separator **104**. Unterhalb des Katalysatorelements **105** ist ein für Zink/Luft-Knopfzellen typischer Luftverteiler **106** angeordnet.
   Es ist gut zu erkennen, dass im Fall A zwischen der Anode **107** und dem Separator **104** nur in einem zentralen Teilbereich eine vollflächige Verbindung besteht. Stattdessen existiert ein Luftpolster **108** das eine direkte Verbindung zwischen der Anode und dem Separator in einem umlaufenden Randbereich unterbindet.
   Nach dem Zentrifugieren (B) ist der Separator dagegen anodenseitig vollständig mit der Anode **107** bedeckt. Das Luftpolster **108** ist beim Zentrifugieren in Richtung des Zellendeckelbodens gerutscht.

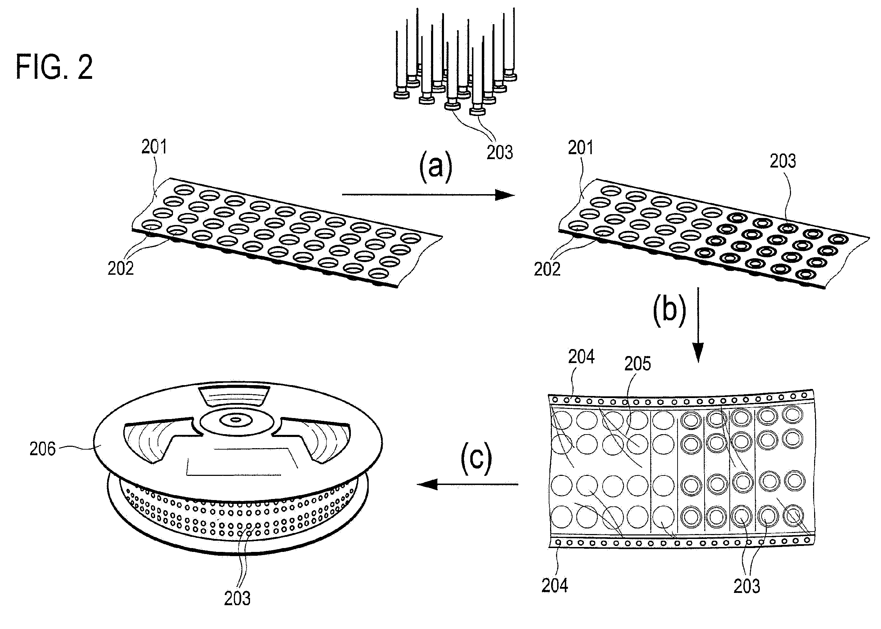

**Fig. 2** illustriert einige Teilschritte des erfindungsgemäßen Verfahrens. Zunächst wird ein Band **201** (ausschnittsweise dargestellt) mit napfförmigen Aufnahmen **202** bereitgestellt. In Schritt (a) werden Knopfzellen **203** in den Aufnahmen **202** positioniert. Die Knopfzellen **203** weisen jeweils ein Gehäuse aus einem Zellenbecher und einem Zellendeckel auf, zwischen welchen eine Dichtung angeordnet ist. Sie werden jeweils mit dem Boden des Zellenbechers voran in den Aufnahmen positioniert. Innerhalb des Gehäuse sind jeweils eine Kathode (bzw. im Falle von Zink/Luft-Knopfzellen ein Katalysatorelement), eine Anode, ein Separator sowie Elektrolyt angeordnet. In Schritt (b) werden die Aufnahmen **202** mit den darin positionierten Knopfzellen **203** mit einer Abdeckfolie **205** abgedeckt, die an den Rändern **204** des Bandes **201** mittels eines Heißsiegelprozesses fixiert wird. Das Band wird anschließend in Schritt (c) auf die Scheibenspule **206** aufgerollt. Diese wird anschließend auf einer Achse fixiert und in Rotation versetzt (dieser Schritt ist nicht mehr dargestellt).

Nach Schritt (c) kann das Band **201** auf der Spule **206** gelagert oder transportiert werden. Die Spule **206** bildet gemeinsam mit dem Band **201** eine Ausführungsform eines erfindungsgemäßen Lager- und Transportmediums.

## Patentansprüche

1. Verfahren zur Produktion von Knopfzellen aus den Komponenten
• Zellenbecher und Zellendeckel,
• Kathode,
• Anode,
• Separator,
• Dichtung, und
• Elektrolyt,
umfassend das Zusammenfügen und die Montage der genannten Komponenten zu Knopfzellen sowie einen anschließenden Zentrifugiervorgang zum Zwecke der Verbesserung der Kontaktierung von Anode, Separator und Kathode der montierten Zellen,
**dadurch gekennzeichnet, dass** für den Zentrifugiervorgang
• ein Band mit napfförmigen Aufnahmen bereitgestellt wird,
• die montierten Zellen in den Aufnahmen positioniert werden, und
• das Band in vorzugsweise spiralförmig gewickelter Form um eine Achse angeordnet und um diese Achse herum in Rotation versetzt wird, so dass die Anode durch die gebildete Fliehkraft gegen den Separator gepresst wird.

2. Verfahren nach Anspruch 1, **dadurch gekennzeichnet, dass** es sich bei dem Band um ein Kunststoffband handelt, in das die Aufnahmen mittels eines Tiefziehvorgangs eingebracht sind.

3. Verfahren nach einem der Ansprüche 1 oder 2, **dadurch gekennzeichnet, dass** die Aufnahmen mit den darin positionierten Zellen mit einer Abdeckfolie abgedeckt werden, bevorzugt bevor das Band um die Achse herum angeordnet wird.

4. Verfahren nach einem der vorhergehenden Ansprüche, **dadurch gekennzeichnet, dass** das Band auf den Mantel einer Zentrifugierspule aufgewickelt oder in einer Zentrifugiertrommel angeordnet wird.

5. Lager- und Transportmedium für Knopfzellen umfassend eine als Zentrifugierspule dienende Scheibenspule mit einem zylindrischen Mittelteil sowie mit überstehenden Begrenzungen an dessen Stirnseiten sowie ein auf dem zylindrischen Mittelteil aufgewickeltes Band mit napfförmigen Aufnahmen, in denen die Knopfzellen angeordnet sind.

## Claims

1. Method for the production of button cells made up of the components
• cell cup and cell lid,
• anode,
• cathode,
• separator,
• seal, and
• electrolyte,
comprising joining together and assembling the said components to form button cells and a subsequent centrifuging operation for the purpose of improving the contacting of the anode, separator and cathode of the assembled cells,
**characterized in that**, for the centrifuging operation
• a strip with well-like receptacles is provided,
• the assembled cells are positioned in the receptacles, and
• the strip is arranged in a preferably spirally wound form around an axis and is set in rotation about this axis, so that the anode is forced against the separator by the centrifugal force produced.

2. Method according to Claim 1, **characterized in that** the strip is a strip of plastic into which the receptacles are introduced by means of a thermoforming operation.

3. Method according to either of Claims 1 and 2, **characterized in that** the receptacles with the cells positioned in them are covered with a covering film, preferably before the strip is arranged around the axis.

4. Method according to one of the preceding claims, **characterized in that** the strip is wound up onto the lateral surface of a centrifuging reel or is arranged in a centrifuging drum.

5. Storing and transporting medium for button cells comprising a disc reel serving as the centrifuging reel, with a cylindrical middle part and with projecting delimitations at its end faces and also a strip with well-like receptacles, in which the button cells are arranged, wound up on the cylindrical middle part.

## Revendications

1. Procédé de production de piles boutons à partir des composants suivants :
- godet de pile et couvercle de pile,
- cathode,
- anode,
- séparateur,
- joint d'étanchéité, et
- électrolyte,
comprenant l'assemblage et le montage desdits composants pour former des piles boutons ainsi qu'une opération de centrifugation subséquente afin d'améliorer le contact de l'anode, du séparateur et de la cathode des piles montées, **caractérisé en ce que** pour l'opération de centrifugation
- une bande avec des logements en forme d'alvéoles est prévue,
- les piles montées sont positionnées dans les logements, et
- la bande est disposée de préférence sous forme enroulée en hélice autour d'un axe et est mise en rotation autour de cet axe de telle sorte que l'anode soit pressée contre le séparateur sous l'effet de la force centrifuge créée.

2. Procédé selon la revendication 1, **caractérisé en ce que** la bande est une bande en plastique dans laquelle les logements sont réalisés par une opération d'emboutissage profond.

3. Procédé selon l'une quelconque des revendications 1 ou 2, **caractérisé en ce que** les logements avec les piles positionnées dans ceux-ci sont recouverts d'un film de recouvrement, de préférence avant que la bande ne soit disposée autour de l'axe.

4. Procédé selon l'une quelconque des revendications précédentes, **caractérisé en ce que** la bande est enroulée sur l'enveloppe d'une bobine de centrifugation ou est disposée dans un tambour de centrifugation.

5. Support de stockage de transport pour des piles bouton comprenant une bobine à rebords servant de bobine de centrifugation avec une partie centrale cylindrique ainsi qu'avec des délimitations saillantes au niveau de ses côtés frontaux ainsi qu'une bande enroulée sur la partie centrale cylindrique avec des logements en forme d'alvéoles dans lesquels sont disposées les piles bouton.
